Europäisches Patentamt

European Patent Office

Office européen des brevets

(19)

(11) Veröffentlichungsnummer: **0 389 917**
**A1**

## (12) EUROPÄISCHE PATENTANMELDUNG

(21) Anmeldenummer: **90105173.0**

(22) Anmeldetag: **20.03.90**

(51) Int. Cl.⁵: **B65G 19/02, B65G 19/28, B65G 19/20**

(30) Priorität: **31.03.89 DE 3910452**

(43) Veröffentlichungstag der Anmeldung:
**03.10.90 Patentblatt 90/40**

(84) Benannte Vertragsstaaten:
**AT BE CH DE DK ES FR GB GR IT LI LU NL SE**

(71) Anmelder: **Schmalbach-Lubeca AG**
**Schmalbachstrasse 1**
**D-3300 Braunschweig(DE)**

(72) Erfinder: **Hantelmann, Rolf**
**Auf dem Klinte 1**
**D-3302 Cremlingen 5(DE)**
Erfinder: **Schwark, Hartmut**
**Butterberg 11**
**D-3300 Braunschweig(DE)**

(74) Vertreter: **Fricke, Joachim, Dr. et al**
**Dr.-Ing. R. Döring, Dipl.- Phys. Dr. J. Fricke,**
**Dipl.-Phys. M. Einsel Josephspitalstrasse 7**
**D-8000 München 2(DE)**

(54) **Führung für Stapel von scheibenförmigen Elementen.**

(57) Es ist eine Führung für Stapel von scheibenförmigen Elementen (3), insb. für Blechdeckel von Dosen vorgesehen, die aus wenigstens einem langgestreckten Profilelement (14) mit einer über die ganze Länge des Profilelementes verlaufenden hohlzylindrischen Führungsfläche (4) besteht. Radial außerhalb dieser Führungsfläche (4) ist ein Führungskanal (9) für ein flexibles Antriebselement (11) vorgesehen, der im Querschnitt den Querschnitt der Führungsfläche (4) unter Bildung eines Spaltes (12) so anschneidet, daß das flexible Antriebselement (11) mit den eingelegten Blechdeckeln (3) in einen für die Förderung ausreichenden Reibungskontakt gelangt.

EP 0 389 917 A1

## Führung für Stapel von scheibenförmigen Elementen

Die Erfindung betrifft eine Führung für Stapel von scheibenförmigen Elementen, wie Deckel für Behälter, insb. Blechdeckel für Dosen.

Deckel für Dosen werden jährlich in Hundertmillionen Stückzahlen hergestellt und benötigt. Obwohl es sich um einen Massenartikel handelt, sind solche Deckel heute hochentwickelt und unterliegen, je nach Anwendungszweck, mehreren Herstellungs-, Bearbeitungs-, Transport- und Zwischenlagerungsvorgängen. Dies gilt sowohl für die Herstellung der Deckel bis zum Verpacken dieser Deckel in Form von Deckelstapeln an der Herstellungsstätte als auch für Abfüllbetriebe, bei denen die Deckel, wiederum in Stapeln, vom Lager oder von Vorratsbereichen mit hoher Geschwindigkeit und genauer Abstimmung auf andere Vorgänge an die Stelle der Zusammenführung mit den zugehörigen Behältern oder Dosen zum Zwecke des Verschließens der Behälter transportiert werden müssen. Die Transportstrecken in einem solchen Betrieb können bis zu mehreren Hundert Metern betragen. Auch muß der Transport häufig über mehrere Stockwerte auf oder ab geführt und unter Richtungswechsel durch Kurven geführt werden.

Es ist bekannt, die für diesen Transport notwendigen Führungen aus einer den Stapel aufnehmenden Rinne zu bilden, die durch einen umgekehrt schalenförmigen Käfig umkleidet ist, der aus in Längsrichtung der Führung verlaufenden Längsstangen und bogenförmigen Querstangen besteht, die die Längsstangen zusammenhalten. Derartige Führungssysteme sind relativ teuer. Gleiches gilt für Antriebseinrichtungen, die diesen Führungssystemen zugeordnet sind, um die scheibenförmigen Elemente oder Deckel entlang der Führung zu transportieren bzw. anzuhalten oder zu beschleunigen.

Es ist Aufgabe der Erfindung eine Führung für die eingangs angegebenen Zwecke zu schaffen, die außerordentlich einfach herzustellen und an die verschiedenen Anwendungszwecke anzupassen ist und einen einfachen und sicheren Antrieb der scheibenförmigen Elemente entlang der Führung sicherstellt.

Diese Aufgabe wird durch die Lehre des Anspruchs 1 gelöst.

Die langgestreckten Profilelemente können beliebige Länge aufweisen und geradlinig ausgebildet oder - von der Geradlinigkeit abweichend - nach unten, nach oben, nach der einen oder anderen Seite hin oder entlang einer ausgewählten Richtung stetig gekrümmt oder gewunden ausgebildet sein. Die Profilelemente lassen sich auf einfache Weise nach einer der bekannten Methoden, z. B. durch Strangpressen, Strangpreßgießen, durch Gießformen der dgl. herstellen. Sie können aus Leichtmetall als Hohlprofile ausgebildet sein. Bevorzugt werden sie jedoch aus einem antistatischen Kunststoff hergestellt oder mit einem solchen beschichtet. Die scheibenförmigen Elemente lassen sich leicht in die Profilelemente einlegen, insb. wenn sich die hohlzylindrische Führungsfläche im Querschnitt gesehen wenigstens eines Profilelementes nur über einen Winkel von etwa 180° oder nur wenig darüber erstreckt. Bedarfsweise kann die offene Seite der Profilelemente auf geeignete Weise abgedeckt sein. Es ist aber auch möglich, in Bereichen der Förderstrecke, wo eine Gefahr besteht, daß die Profilelemente aus der Führung heraustreten können, die hohlzylindrische Führungsfläche über einen größeren Winkel als 180° auszudehnen.

Der Führungskanal für das flexible Anriebselement liegt zweckmäßigerweise im Bereich der Winkelhalbierenden des im Querschnitt gemessenen Erstreckungswinkels der Führungsfläche. Der Führungskanal ist dabei zweckmäßigerweise von kreisförmigem Querschnitt. Der durch das Überschneiden der Umrisse von Führungsfläche und Führungskanal entstehende Spalt weist zweckmäßigerweise eine Breite auf, die deutlich kleiner als der Durchmesser des Führungskanals ist.

Das in den Führungskanal eingelegte Antriebselement ist von geringer Dehnbarkeit, aber ausreichender Flexibilität und besteht aus einem Material, das leicht in dem Führungskanal gleitet. Der Führungskanal kann zusätzlich mit einer Schicht aus gleitfähigem Material ausgekleidet sein. Das Antriebselement füllt den Querschnitt des Führungskanals bis auf ein kleines Spiel aus. Im entlasteten Zustand erstreckt sich der Querschnitt des Antriebselementes geringfügig in den Querschnitt hinein, der durch die Führungsfläche begrenzt ist. Im Betriebszustand liegen damit die scheibenförmigen Elemente mit dem leichten Druck ihres Eigengewichtes auf dem flexiblen Antriebselement auf und werden durch dieses sicher in der Führung beschleunigt und gefördert und abgebremst. Dabei besteht ein besonderer Vorteil darin, daß aufgrund der Ausbildung der Führungskanal vollständig, d.h. bis zum letzten scheibenförmigen Element, entleert werden kann.

Die Erfindung wird nachfolgend anhand schematischer Zeichnungen an einem Ausführungsbeispiel näher erläutert. Es zeigen:

Figur 1 in Stirnansicht ein Profilelement einer Führung gemäß der Erfindung.

Figur 2 in Draufsicht ein Profilelement, das in Längsrichtung entlang einem Viertelkreisbogen gekrümmt verläuft und

Figur 3 im Querschnitt und in perspektivischer Ansicht und im größeren Maßstabe ein flexibles Antriebselement, das bei der Führung gemäß der Erfindung Verwendung findet.

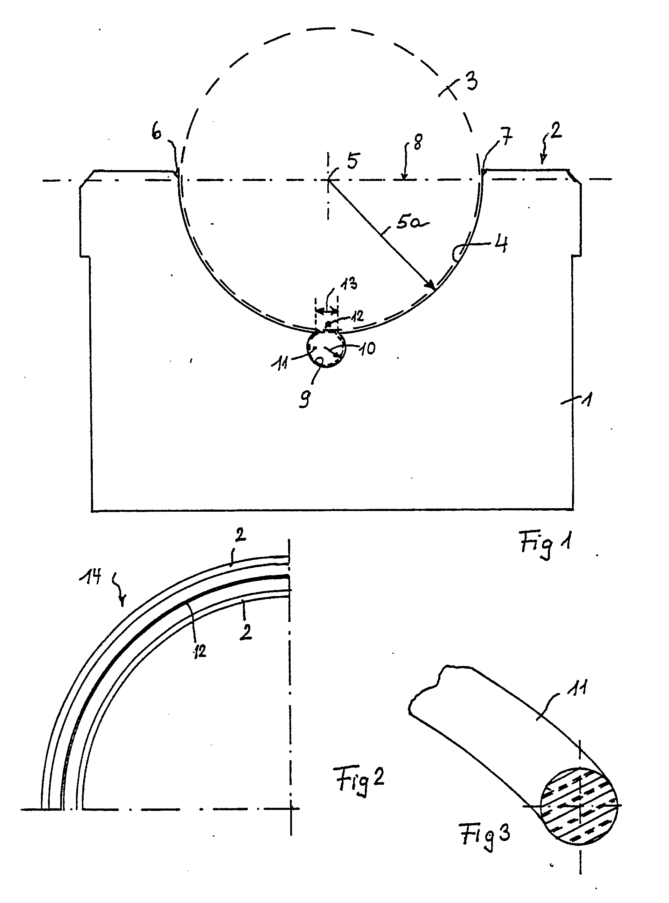

Die Führung nach der Erfindung ist aus einer Mehrzahl von langgestreckten Profilelementen, wie das Profilelemente 14 nach Figur 2 gebildet, die stirnseitig aneinander anschließbar sind. Die Länge der einzelnen Profilelemente kann unterschiedlich sein. Jedes Profilelement kann geradlinig oder nach der einen oder nach der anderen Seite oder nach unten oder nach oben stetig gekrümmt oder geneigt ausgebildet sein. Es ist auch möglich die Profilelemente so auszubilden, daß sie mit ihrer Längsrichtung einer vorbestimmten Linie von sich stetig ändernder Ausrichtung folgen.

Die Profilelemente können durch Gießen, Stranggießen oder Strangpressen oder nach einem anderen bekannten Herstellungsverfahren mit der notwendigen hohen Genauigkeit hergestellt werden.

Wie die Stirnansicht nach Figur 1 zeigt, weist jedes Profilelement eine an den Durchmesser der zu fördernden scheibenförmigen Elemente 3 angepaßte hohlzylindrische Führungsfläche 4 auf. In der bevorzugten Ausführungsform erstreckt sich diese im Querschnitt über einen Winkel von etwa 180°, oder, wie gezeigt, nur wenig darüber. Die Stapel von scheibenförmigen Elementen lassen sich also leicht von oben in die Führungsfläche 4 des Profilelementes einlegen. Für bestimmte Zwecke, insb. für Stellen, wo die Gefahr besteht, daß die scheibenförmigen Elemente aus der Führung springen können, kann sich die Führungsfläche auch um mehr als 180° in Umfangsrichtung ausdehnen.

Die Längskanten 6 und 7 der Führungsfläche 4 sind gebrochen. Die beiderseits liegenden schmalen Oberflächenbänder 2 liegen in der bevorzugten Ausführungsform nur wenig über der 180°-Ebene 8.

Die teilzylindrische Führungsfläche 4 weist einen kreisförmigen Querschnitt auf und besitzt einen von dem Mittelpunkt 5 ausgehenden Krümmungsradius 5a, der nur sehr wenig größer ist als der Radius des äußeren Umfanges der scheibenförmigen Elemente, so daß diese leichtgängig aber mit nur geringem Spiel und in senkrechter Ausrichtung gegenüber der Führungsfläche 4 in dieser entlanglaufen können.

Die Führung 1 kann aus einem für die scheibenförmigen Elemente reibungsarmen Material bestehen. Es kann auch die Führungsfläche 4 mit einem solchen Material beschichtet sein.

Im Körper 1 der Führung befindet sich in jedem Profilelement 14 ein Führungskanal 9. Bei der bevorzugten Ausführungsform weist dieser einen kreisförmigen Querschnitt auf und ist im Bereich der Winkelhalbierenden des umfänglichen Erstreckungswinkels der Führungsfläche 4 angeordnet. Der Mittelpunkt, von dem der Krümmungsradius 10 des Führungskanals 9 ausgeht, liegt radial außerhalb der Führungsfläche 4, wobei der Abstand zwischen dem Mittelpunkt und der Führungsfläche 4 kleiner als der Krümmungsradius 10 ist, so daß der Führungskanal 9 die Führungsfläche 4 unter Bildung eines Längsspaltes 12 anschneidet. Die Weite 13 des Spaltes 12 ist deutlich kleiner als der Durchmesser des Führungskanals 9. In dem Führungskanal 9 ist ein langgestrecktes, flexibles Antriebselement 11 eingelegt, dessen Durchmesser nur geringfügig kleiner als der Durchmesser der Führung 9 ist. Das Material des Antriebselemente und das Material der Innenfläche des Führungskanals sind so aufeinander abgestimmt, daß das flexible Antriebselement trotz des geringen Spiels mit nur geringer Reibung in dem Führungskanal 9 gleiten kann. Der Durchmesser des flexiblen Antriebselemente 11 ist in jedem Falle so gewählt, daß das in den Führungskanal eingelegte Antriebselement im entspannten Zustand geringfügig über den Führungskanal 9 und über die Führungsfläche 4 hinaus vorspringt. Dadurch wird sichergestellt, daß die scheibenförmigen Elemente bei ihrem Einsetzen in die Führungsfläche 4 unter der Wirkung ihres Eigengewichtes leicht auf dem flexiblen Antriebselement 11 aufliegen und daher durch dieses in der Führungsfläche 4 in Längsrichtung beschleunigt, gefördert und abgebremst werden können.

Das flexible Antriebselement folgt der Erstrekkungsrichtung des Profilelementes 14 in jeder Richtung und stellt so auf jeder Strecke der Gesamtförderbahn ein sicheres Antriebs- und Führungselement dar. Es ermöglicht auch eine vollständige Entleerung der Führung bis auf das letzte scheibenförmige Element.

Das flexible Antriebselement kann eine Schnurfeder sein. Es kann aber auch eine Litze, eine Schnur oder ein Seil aus Metall- oder Kunststoff-Federn sein. Auch eignet sich, wie in Figur 3 gezeigt ist, ein Monofil mit an den Führungskanal 9 angepaßten Durchmesser aus geeignetem Kunststoff.

Bei einer Führung für Deckel aus Blech z.B. für Getränkedosen kann beispielsweise die Führungsfläche einen Radius von etwa 33 mm aufweisen. In diesem Fall weist der Führungskanal einen Durchmesser von etwa 9 mm auf. Der Krümmungsmittelpunkt des Führungskanals liegt dabei um etwa 2,5 mm außerhalb der Führungsfläche und zwar auf der Winkelhalbierenden des umfänglichen Erstreckungswinkels der Führungsfläche.

Mit einem Profilelement mit den obigen Abmessungen können Krümmungen für Streckenumlenkungen oder Streckenbiegungen mit einem Radius von beispielsweise 600 mm verwirklicht werden. Für den Körper 1 des Profilelementes bzw. für das flexible Antriebselement haben sich folgende Materialien als vorteilhaft bzw. zweckmäßig erwiesen.

Der Körper 1 wird bevorzugt aus einem Gußpolyamid hergestellt, das zweckmäßigerweise antistatisch ausgerüstet ist. Das flexible Antriebselement besteht dagegen bevorzugt aus einem Polyester, der eine für den Einsatz ausreichende Elastizität besitzt.

**Ansprüche**

1. Führung für Stapel von scheibenförmigen Elementen, wie Deckel für Behälter, insb. Blechdeckel für Dosen, dadurch **gekennzeichnet**, daß sie ein oder mehrere stirnseitig aneinander anschließbare, langgestreckte Profilelemente (14) aufweist, die jedes eine im Querschnitt teilzylindrische Führungsfläche (4) für die scheibenförmigen Elemente (3) und einen diese Führungsfläche (4) im Querschnitt anschneidenden und dazu parallelen Führungskanal (9) für ein langgestrecktes, flexibles Antriebselement (11) aufweist.

2. Führung nach Anspruch 1, dadurch **gekennzeichnet**, daß sich die hohlzylindrische Führungsfläche (4) im Querschnitt über einen Winkel von etwa 180° oder nur wenig darüber erstreckt.

3. Führung nach Anspruch 1 oder 2, dadurch **gekennzeichnet**, daß sie aus einem antistatischen Werkstoff besteht.

4. Führung nach einem der Ansprüche 1 bis 3, dadurch **gekennzeichnet**, daß der Führungskanal (9) einen kreisförmigen Querschnitt aufweist.

5. Führung nach einem der Ansprüche 1 bis 4, dadurch **gekennzeichnet**, daß der Führungskanal (9) - im Querschnitt gesehen - im Bereich der Halbierenden des Erstreckungswinkels der Führungsfläche (4) angeordnet ist.

6. Führung nach einem der Ansprüche 1 bis 5, dadurch **gekennzeichnet**, daß der Spalt (12) zwischen Führungsfläche (4) und Führungskanal (9) deutlich kleiner als der Durchmesser des Führungskanals (9) ist.

7. Führung nach einem der Ansprüche 4 oder 5, dadurch **gekennzeichnet**, daß der Krümmungsmittelpunkt des Führungskanals (9) radial außerhalb der hohlzylindrischen Führungsfläche (4) angeordnet ist.

8. Führung nach einem der Ansprüche 1 bis 7, dadurch**gekennzeich net**, daß als flexibles Antriebselement (11 )eine Schnur oder ein Seil aus Metall oder Kunststoff, eine Schnurfeder, oder ein Monofil mit an den Führungskanal (9) angepaßtem Durchmesser aus Kunststoff vorgesehen ist.

9. Führung nach einem der Ansprüche 1 bis 8, dadurch **gekennzeichnet**, daß die Längskanten (6,7) der Führungsfläche (4) gebrochen ausgebildet sind.

10. Führung nach einem der Ansprüche 4 bis 9, dadurch **gekennzeichnet**, daß der Durchmesser des Führungskanals (9) zwischen etwa 1/5 und 1/10 des Durchmessers der Führungsfläche (4) bemißt und vorzugsweise zwischen etwa 8 mm und etwa 10 mm liegt.

11. Führung nach einem der Ansprüche 1 bis 10, dadurch **gekennzeichnet**, daß das Profilelement (14) - von der Geradlinigkeit abweichend - nach unten, nach oben, nach der einen oder der anderen Seite hin oder in sich stetig ändernder Richtung stetig gekrümmt oder gewunden ausgebildet ist.

Fig 1

Fig 2

Fig 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 150 889 (THOMASSEN & DRIJVER-VERBLIFA) * Seite 3, Zeile 17 - Seite 6, Zeile 10; Seite 7, Zeilen 21-33; Figuren * --- | 1,8 | B 65 G 19/02 B 65 G 19/28 B 65 G 19/20 |
| A | FR-A-2 093 970 (KORNYLAK) * Figur 6 * --- | 1,8 | |
| A | FR-A-2 170 874 (SECAP) * Figuren * --- | 1,8 | |
| A | US-A-3 350 842 (RENISH) * Das ganze Dokument * ----- | 1 | |

| | | | RECHERCHIERTE SACHGEBIETE (Int. Cl.5) |
|---|---|---|---|
| | | | B 65 G B 65 B |

Der vorliegende Recherchenbericht wurde für alle Patentansprüche erstellt

| Recherchenort | Abschlußdatum der Recherche | Prüfer |
|---|---|---|
| DEN HAAG | 19-06-1990 | OSTYN T.J.M. |